## Europäisches Patentamt
## European Patent Office
## Office européen des brevets

(19)

(11) Veröffentlichungsnummer: **0 264 458**
**B1**

(12)

# EUROPÄISCHE PATENTSCHRIFT

(45) Veröffentlichungstag der Patentschrift:
28.11.90

(21) Anmeldenummer: 86113045.8

(22) Anmeldetag: 22.09.86

(51) Int. Cl.⁵: **B65G 25/02**

(54) Transporteinrichtung für stangenartiges Material.

(43) Veröffentlichungstag der Anmeldung:
27.04.88 Patentblatt 88/17

(45) Bekanntmachung des Hinweises auf die Patenterteilung:
28.11.90 Patentblatt 90/48

(84) Benannte Vertragsstaaten:
CH DE FR GB IT LI

(56) Entgegenhaltungen:
DE-A- 1 962 535
DE-A- 3 530 044
DE-C- 893 484
GB-A- 882 872
GB-A- 1 162 591
GB-A- 1 417 373

(73) Patentinhaber: **Gustav Wagner Maschinenfabrik GmbH & Co. KG, Opfersteinstrasse 11, D-7410 Reutlingen 1(DE)**

(72) Der Erfinder hat auf seine Nennung verzichtet

(74) Vertreter: **Popp, Eugen, Dr. et al, MEISSNER, BOLTE & PARTNER Widenmayerstrasse 48 Postfach 86 06 24, D-8000 München 86(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Transporteinrichtung für stangenförmiges Material für die Zuführung zu einer Bearbeitungsmaschine, gemäß dem Oberbegriff des Patentanspruches 1.

Eine solche Transporteinrichtung ist aus der GB-A 882 872 bekannt. Bei der bekannten Transporteinrichtung sind jedoch keine Maßnahmen zur geräuscharmen und insbesondere oberflächenschonenden Entfernung von Reststangenmaterial vom Rollgang vorgesehen.

Der Erfindung liegt daher die Aufgabe zugrunde die Transporteinrichtung der bekannten Art so weiterzubilden, daß zum einen eine Mehrzahl von stangenförmigen Werkstücken verschiedenster Formen und Querschnitt oberflächenschonend und geräuscharm mit einfachen Mitteln direkt zum Rollgang transportiert und zum anderen Reststangenmaterial im Rahmen eines Förderschrittes der Einrichtung vom Rollgang abschiebbar ist.

Diese Aufgabe wird erfindungsgemäß durch die kennzeichnenden Merkmale des Patentanspruches 1 gelöst.

Bevorzugte konstruktive Details der Erfindung sind in den Unteransprüchen beschrieben.

Durch die erfindungsgemäße Ausbildung und Bewegung der rechenförmigen Auflageschienen wird eine vor dem Rollgang ankommende Stange bei der Aufwärts- und Vorbewegung der bewegbaren Auflageschienen über die Anlagekante des Rollgangs gehoben und bei der Abwärts- und Rückbewegung vor die Ablagekante gezogen bzw. gelegt. Die auf dem Rollgang abgelegte Stange wird mittels z.B. eines Greifers der Bearbeitungsmaschine zugeführt. Die erfindungsgemäß vorgesehenen Maßnahmen im Bereich der vorderen Enden der beweglichen Auflageschienen dienen dem oberflächenschonenden und geräuscharmen Abschieben von Reststangenmaterial vom Rollgang zu einer Ablage, wobei in bekannter Weise der Ab- bzw. Ausschiebevorgang eingeleitet wird, wenn die nächste Stange auf dem Rollgang abgelegt werden soll. Durch die erfindungsgemäß vorgesehenen Förder- bzw. Nockenlaschen an den vorderen Enden der beweglichen Auflageschienen wird eine besonders schonende Behandlung des Reststangenmaterials beim Entfernen desselben vom Rollgang erhalten. Mittels der genannten Nockenlasche wird der Ausschiebevorgang für das zu entfernende Reststangenmaterial in der Endphase besonders sanft und oberflächenschonend sowie dementsprechend geräuscharm fortgesetzt, d.h. über den Wirkbereich der vorderen Enden der beweglichen Auflageschienen selbst hinaus, so daß auf dem Rollgang ausreichend Freiraum für nachfolgendes Stangenmaterial erhalten wird, dessen Querabmessung größer ist als der Hub der bewegbaren Auflageschienen (z.B. Hub: 120 mm; Querabmessung des Stangenmaterials, d.h. Abmessung in Hubrichtung: 150mm; der zusätzliche Freiraum von etwa 35mm wird durch die Nockenlasche erhalten).

Auf diese Weise kann der Hub der bewegbaren Auflageschienen und damit die Einrichtung insgesamt kleiner bemessen bzw. gebaut werden, als es normalerweise der größten Abmessung des zu fördernden bzw. zu bearbeitenden Materials in Richtung der Hubbewegung entspricht.

Die in den Unteransprüchen noch beanspruchten Abmessungen der Auflageprismen ist für den normalen Transport der Werkstücke ebenfalls sehr oberflächenschonend und dementsprechend auch geräuscharm, und zwar auch dann, wenn sich die Werkstücke über ein Ablagefach hinaus erstrecken. Die beanspruchten Auflageprismen eignen sich genauso gut zum Transport von Vierkant- oder Profilmaterial wie zum Transport von Rundmaterial. Der Durchmesser von zu transportierendem Rundmaterial kann bei den übrigen unveränderten Abmessungen der Auflageschienen ganz erheblich erhöht werden, wenn die Stützflächen der Auflageprismen sich jeweils unter einem stumpfen Winkel von z.B. 110° zueinander erstrecken.

Nachstehend wird eine bevorzugte Ausführungsform der erfindungsgemäßen Transporteinrichtung anhand der beigefügten Zeichnung näher beschrieben. Es zeigen:

Fig. 1 eine schematische Seitenansicht der Einrichtung,

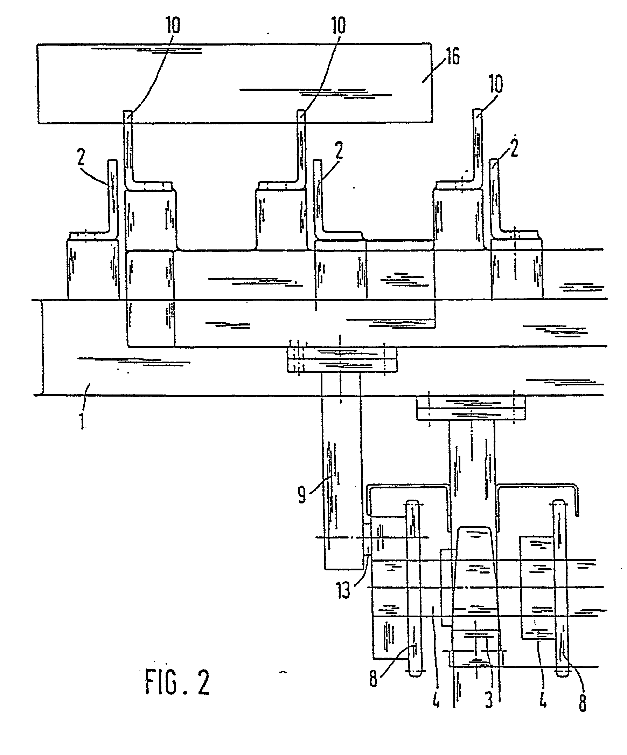

Fig. 2 eine schematische Vorderansicht der Einrichtung, und

Fig. 3 ein Detail der Einrichtung nach den Fig. 1 und 2 in schematischer Seitenansicht und vergrößertem Maßstab.

Ein Grundgestell 1 besteht aus einem zusammengeschweißten Rahmen, auf dem erste rechenartige Material-Auflageschienen 2 aufgeschraubt sind, die Ablagefächer bildende Aufageprismen 5 aufweisen. Auf diesem Grundgestell 1 ist auch ein Stehlager 3 aufgeschraubt, in dem eine Antriebswelle 4 gelagert ist. Mittels eines (nicht dargestellten) Getriebemotors wird über (nicht dargestellte) Ketten und Kettenräder 8 eine Hubeinrichtung 9 angetrieben. Die Hubeinrichtung 9 besteht wie das Grundgestell 1 aus einem zusammengeschweißten Rahmen. Auf diesem Rahmen sind zweite rechenartige Material-Auflageschienen 10 aufgeschraubt, die Ablagefächer bildende Auflageprismen 6 aufweisen. Die zweiten Material-Auflageschienen 10 der Hubeinrichtung 9 haben vorne jeweils einen Reststangen-Ausschiebewinkel 11 angeschweißt, mit dem die zurücktransportierten Reststangen auf eine Reststangen-Ablage 12 beim Laden der nächsten Materialstange abgeschoben werden. Die Hubeinrichtung 9 ist an Bolzen 13, die in den Kettenrädern 8 gelagert sind, eingehängt. Ein Rollgang 14 mit losen Transportrollen 15 wird auf das Grundgestell 1 aufgeschraubt und ist mit einer Anlagekante 18 versehen. Die Reststangen-Ablage 12 wurde mit einer Neigung von etwa 20° ausgeführt. Entsprechend der Beladeseite kann auf der Reststangen-Ablage 12 dieselbe Stückzahl abgelegt werden. Die Reststangen-Ablage 12 kann sich auch horizontal erstrecken.

Die Arbeitsweise der beschriebenen Transporteinrichtung ist wie folgt:

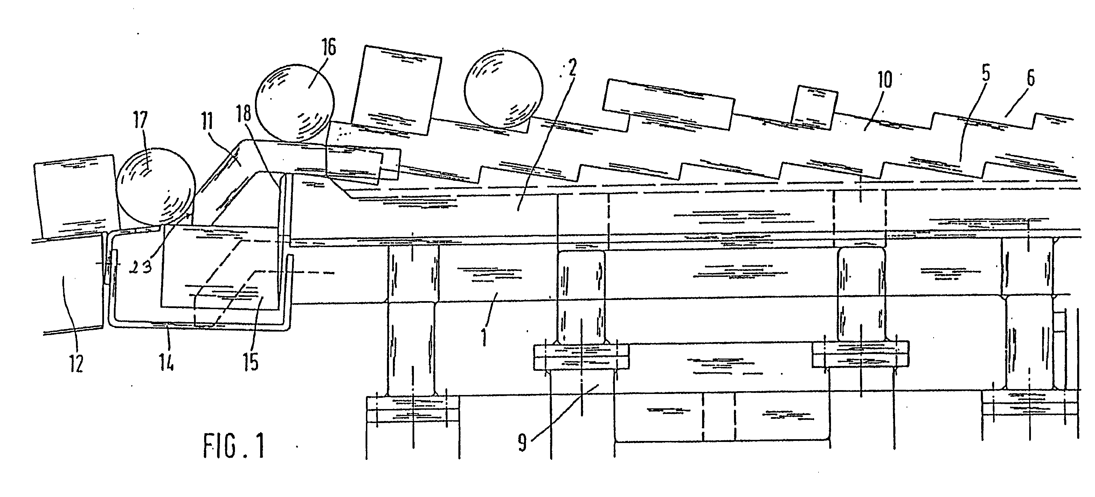

Die zu bearbeitende, insbesondere zu sägende Stange wird in die ersten Auflageprismen der Material-Auflageschienen 2 eingelegt. Die Hubeinrichtung 9 transportiert mittels ihrer zweiten Material-Auflageschienen 10 die aufgelegten Stangen um einen Takt weiter. Es wird grundsätzlich immer weitergetaktet, bis eine Stange 16 im Rollgang 14 liegt. Dies wird durch einen nichtdargestellten, vorzugsweise optischen, Sensor festgestellt. Beim letzten Takt wird die auf dem vordersten Auflageprisma liegende Stange 16 über die Anlagekante 18 gehoben und dann auf die Rollen 15 abgesenkt, indem die bewegbaren Auflageschienen 10 jeweils zwischen zwei Rollen 15 treten. Beim Zurückbewegen der bewegbaren Auflageschienen 10 ziehen diese die Stange gegen die Anlagekante 18 und unterfahren die Ablageebene der Rollen. Die unterste Stellung des vordersten Auflageprismas und des Ausschiebewinkels 11 ist in Fig. 1 strichliniert gezeigt. Die im Rollgang 14 abgelegte Stange wird mit dem Werkstück-Greifer der Säge zugeführt.

Die nach dem Sägevorgang zurückgeführte Reststange 17 wird mittels der Reststangen-Ausschiebewinkel 11 auf die Reststangen-Ablage 12 abgeschoben, während die nächste Stange über den Rollgang bewegt und auf diesem abgesenkt wird. Es ist bei diesem Vorgang also keine Unterbrechung des Arbeitstaktes erforderlich.

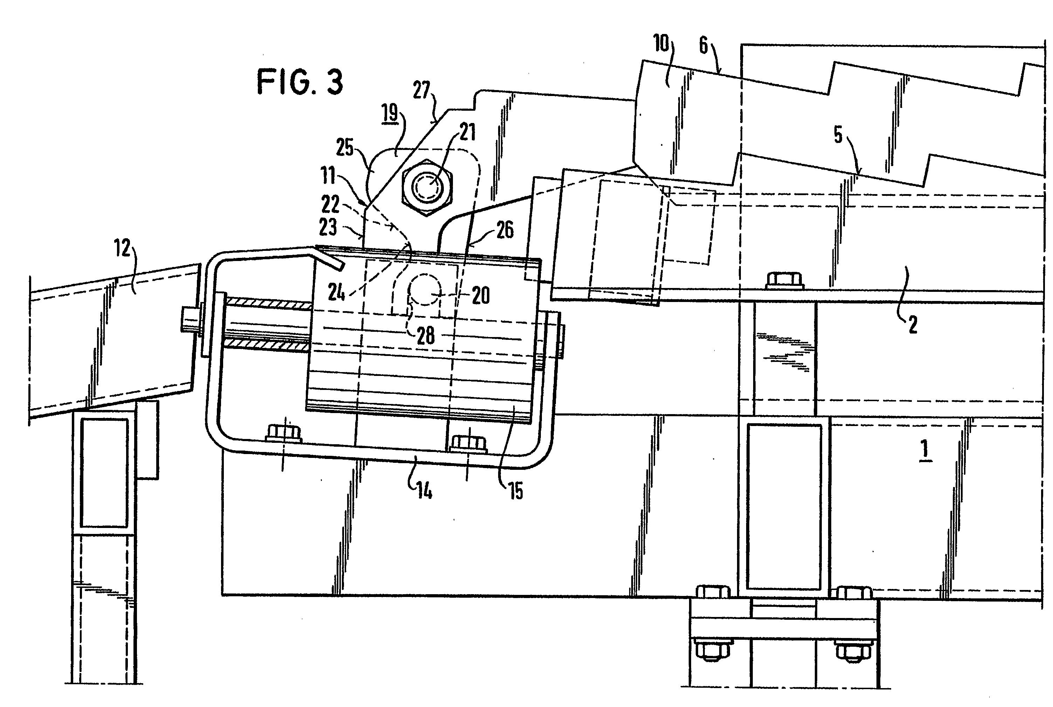

Nachstehend wird anhand der Fig. 3 eine besonders bevorzugte Anordnung im Bereich der Ausschiebewinkel 11 beschrieben.

Die Ausschiebewinkel 11 weisen, wie auch Fig. 1 erkennen läßt, jeweils eine nach vorne, d.h. in Richtung zum Rollgang 14, 15 hin, und unten gerichtete Vorderseite 27 auf, die in eine vordere, sich etwa senkrecht zur Rollgangebene erstreckende Stirnfläche 23 übergeht.

Am vorderen Ende der so ausgebildeten Ausschiebewinkel 11 ist jeweils eine Förderlasche 19 angelenkt (Gelenk 21). Diese ist als Nockenlasche ausgebildet und im Bereich des Rollgangs 14 an einem Querbolzen 20 um die Achse desselben drehbar sowie quer dazu verschiebbar geführt. Zu diesem Zweck weist die Nockenlasche 19 an ihrem der Anlenkung 21 gegenüberliegenden Ende eine langlochartige Ausnehmung 28 auf, in die der Querbolzen 20 hineinragt. Auf diese Weise wird für die Nockenfläche 22 der Förder- bzw. Nockenlasche 19 eine Kurvenbahn definiert, die in der Endphase der Ausschiebebewegung der beweglichen Auflageschienen 10 über die geneigte Vorderseite 27 sowie aufrechte Stirnfläche 23 der den beweglichen Auflageschienen 10 zugeordneten Ausschiebewinkeln 11 hinausragt, wodurch der durch die Ausschiebewinkel 11 eingeleitete Ausschiebevorgang des Reststangenmaterials ohne Unterbrechung sanft und oberflächenschonend festgesetzt wird. Im übrigen ist die Nockenfläche 22 der Nockenlaschen 19 gegenüber der Stirnseitenkontur der Ausschiebewinkel 11 so ausgebildet, daß sie bis zur Endphase des Ausschiebevorgangs gegenüber den jeweils zugeordneten Ausschiebewinkeln 11 zurücksteht. Auf diese Weise stellt die Nockenfläche 22 eine Art bewegte Fortsetzung der Ausschiebewinkel 11 dar. Damit ist auch gewährleistet, daß das Reststangenmaterial auch dann noch aktiv vom Rollgang abgeschoben wird, wenn die aufrechte Stirnfläche 23 des Ausschiebewinkels 11 bereits unter die Rollgangebene abgetaucht ist. Das Ergebnis der beschriebenen Nockenlaschen 19 ist, daß ein im Vergleich zum Hub der beweglichen Auflageschienen 10 größerer Freiraum für nachfolgendes Stangenmaterial auf dem Rollgang 14 geschaffen wird, so daß in Hubrichtung auch größer bemessenes Stangenmaterial ohne Kollision mit dem Reststangenmaterial nachgefördert werden kann. Konkret weist die Nockenfläche 22 ausgehend von der Abstützung im Bereich des Querbolzens 20 eine Einbuchtung 24 auf, an die sich eine im Bereich der Anlenkung 21 am Ausschiebewinkel 11 vorspringende Nase 25 anschließt. Die dieser Nockenfläche 24 gegenüberliegende Seite 26 der Nockenlasche 19 ist jeweils geradlinig ausgebildet. Der nasenartige Vorsprung 25 der Nockenlaschen 19 bewegt sich in der Endphase des Ausschiebevorgangs jeweils über die schräg verlaufende Vorderseite 27 sowie aufrechte Stirnfläche 23 der Ausschiebewinkel 11 vor. Die Einbuchtung 24 gewährleistet, daß im übrigen die Nockenfläche 22 gegenüber der Vorderseite 27 der Ausschiebewinkel 11 zurücksteht, so daß auszuschiebendes Reststangenmaterial durch die Nockenlaschen 19 während des Ausschiebens nicht angehoben wird.

Die in Fig. 3 dargestellte Kontur der Nockenfläche 22 gestattet einen zwängungsfreien und damit sanften sowie oberflächenschonenden seitlichen Abtransport von Reststangenmaterial zur oben beschriebenen Ablage 12.

## Patentansprüche

1. Transporteinrichtung für stangenförmiges Material (16) für die Zuführung zu einer Bearbeitungsmaschine, insbesondere einer Metallsäge, mit in Zuführrichtung sich erstreckenden rechenförmigen Auflageschienen (2, 10), mit einem am vorderen Ende der Auflageschienen (2, 10) querliegenden Rollgang (14, 15), und mit einer Ablage (12) für Reststangenmaterial (17) an der den rechenförmigen Auflageschienen (2, 10) gegenüberliegenden Seite des Rollgangs (14, 15), wobei jeweils zwei Auflageschienen (2, 10) nebeneinander liegen, von denen die eine fest und die andere längs einer geschlossenen Kurvenbahn bewegbar ist, die beweglichen Auflageschienen (10) so angeordnet und ihre Bewegung so gewählt sind, daß ihre vorderen Enden durch den Rollgang (14, 15) treten und dessen Ablageebene in ihrer tiefsten Stellung unterfahren, und wobei an den vorderen Enden der beweglichen Auflageschienen (10) jeweils Verlängerungen (11) zum Abschieben von Reststangenmaterial (17) vom Rollgang (14, 15) auf die Ablage (12) angebracht sind, dadurch gekennzeichnet, daß im Bereich der vorderen Verlängerungen (11) der beweglichen Auflageschienen (10) jeweils eine Förderlasche (19) angelenkt ist, deren anderes, der Anlenkung (21) gegenüberliegendes Ende am Gestell (1) der Einrichtung, insbesondere im Bereich des Rollgangs (14, 15), dreh- und/oder längsverschiebbar geführt ist, wobei die Förderlaschen (19) als Nockenlaschen ausgebildet sind, durch deren Nockenfläche (22) bei Bewegung der beweglichen Auflageschienen (10) ausgehend von einer gegenüber dem Rollgang (14, 15) angehobenen in eine demgegenüber abgesenkte Stellung ein vom Rollgang (14, 15) zu entfernendes Reststangenmaterial (17) erfaßt und vom Rollgang (14, 15) seitlich abgeschoben wird.

2. Transporteinrichtung nach Anspruch 1, dadurch gekennzeichnet, daß die dem Rollgang (14, 15) zugewandten Verlängerungen (11) der beweglichen Auflageschienen (10) unter Ausbildung von Ausschiebewinkeln jeweils eine nach vorne, d.h. in Richtung zum Rollgang (14, 15) hin und unten gerichtete Vorderseite aufweisen, die mit einer vorderen, sich etwa senkrecht zur Rollgangebene erstreckenden bzw. aufrechten Stirnfläche (23) abschließt, und daß die Nockenfläche (22) der Nockenlasche (19) jeweils so ausgebildet ist, daß sie bis kurz vor dem Ende des Ausschiebevorgangs gegenüber der Vorderseite und Stirnfläche der Ausschiebewinkel (11) zurücksteht, um dann am Ende des Ausschiebevorgangs über die Vorderseite und Stirnfläche der als Ausschiebewinkel ausgebildeten Verlängerungen (11) vorzutreten unter fortgesetztem Ausschieben des Reststangenmaterials (17).

3. Transporteinrichtung nach Anspruch 1 oder 2, dadurch gekennzeichnet, daß an den Oberseiten der Auflageschienen (2, 10) Ablagefächer bildende Auflageprismen (5, 6) ausgebildet sind, wobei das Verhältnis der Abmessungen der Seiten eines jeden Auflageprismas (5, 6) vom Rollgang gesehen 5:1 bis 6:1 beträgt.

4. Transporteinrichtung nach Anspruch 3, dadurch gekennzeichnet, daß die Stützflächen der Auflageprismen (5, 6) sich jeweils etwa senkrecht zueinander erstrecken.

5. Transporteinrichtung nach Anspruch 3, dadurch gekennzeichnet, daß die Stützflächen der Auflageprismen (5, 6) einen stumpfen Winkel, insbesondere einen Winkel von etwa 110°, einschließen.

6. Transporteinrichtung nach Anspruch 3, dadurch gekennzeichnet, daß der Winkel zwischen den Stützflächen der Auflageprismen (5, 6) jeweils veränderbar ist.

7. Transporteinrichtung nach einem der Ansprüche 1 - 6, dadurch gekennzeichnet, daß dem Rollgang (14, 15) ein Sensor zugeordnet ist, durch den das Vorhandensein von Stangenmaterial im Rollgang (14, 15) feststellbar und dementsprechend der Antrieb für die beweglichen Auflageschienen (10) steuerbar ist.

## Claims

1. Transport mechanism for bar-shaped stock (16) for feeding to a metal-cutting machine, in particular a metal saw, comprising rake-shaped locating rails (2, 10) extending in the feed direction, a roller table (14, 15) located transversely at the front end of the locating rails (2, 10), and a receiving means (12) for remaining bar stock (17) at the side of the roller table (14, 15) opposite the rake-shaped locating rails (2, 10), in which arrangement, in each case two locating rails (2, 10) lie side-by-side, of which one is fixed and the other is movable along a closed curved path, the movable locating rails (10) are arranged and their movement is selected in such a way that their front ends pass through the roller table (14, 15) and travel below the receiving plane of the latter in their deepest position, and extensions (11) for pushing away remaining bar stock (17) from the roller table (14, 15) onto the receiving means (12) are in each case attached to the front ends of the movable locating rails (10), characterized in that articulated in the area of the front extensions (11) of the movable locating rails (10) is in each case a conveying strap (19) whose other end opposite the articulation (21) is guided in a rotatable and/or longitudinally displaceable manner on the frame (1) of the mechanism, in particular in the area of the roller table (14, 15), the conveying straps (19) being designed as cam straps whose cam face (22), during movement of the movable locating rails (10) starting from a raised position relative to the roller table (14, 15) into an in contrast lowered position, takes hold of the remaining bar stock (17) to be removed from the roller table (14, 15) and pushes it away laterally from the roller table (14, 15).

2. Transport mechanism according to Claim 1, characterized in that the extensions (11), facing the roller table (14, 15), of the movable locating rails (10), while forming push-out angles, in each case have a front side which is directed towards the front, i.e. in the direction of the roller table (14, 15), and downwards and which terminates at a front end face (23) which extends roughly perpendicularly to the plane of the roller table or is upright, and in that the cam face (22) of the cam strap (19) is in each case designed in such a way that, until just before the end of the push-out operation, it is set back from the front side and end face of the pushout angles (11) in order to then project at the end of the push-out operation beyond the front side and end face of the extensions (11), designed as push-out angles, while the remaining bar stock (17) continues to be pushed out.

3. Transport mechanism according to Claim 1 or 2, characterized in that locating vees (5, 6) forming receiving pockets are constructed on the upper sides of the locating rails (2, 10), the ratio of the dimensions of the sides of each locating vee (5, 6), viewed from the roller table, being 5:1 to 6:1.

4. Transport mechanism according to Claim 3, characterized in that the supporting surfaces of the locating vees (5, 6) in each case extend roughly perpendicularly to one another.

5. Transport mechanism according to Claim 3, characterized in that the supporting surfaces of the locating vees (5, 6) enclose an obtuse angle, in particular an angle of about 110°.

6. Transport mechanism according to Claim 3, characterized in that the angle between the supporting surfaces of the locating vees (5, 6) is in each case variable.

7. Transport mechanism according to one of Claims 1 - 6, characterized in that a sensor is allocated to the roller table (14, 15), by which sensor the presence of bar stock in the roller table (14, 15) can be established, and accordingly the drive for the movable locating rails (10) can be controlled.

## Revendications

1. Transporteur pour matière en barres (16) à amener à une machine-outil, en particulier une scie à métaux, équipé de barres d'appui (2, 10) en forme de râteaux, s'étendant dans la direction d'amenée, d'un train de rouleaux (14, 15) disposé transversalement au niveau de l'extrémité antérieure des barres d'appui (2, 10), et d'un poste récepteur (12) pour la matière en barres résiduelle (17) disposé du côté du train de rouleaux (14, 15) opposé aux barres d'appui (2, 10) en forme de râteau, deux barres d'appui (2, 10) étant chaque fois juxtaposées dont l'une est fixe et l'autre déplaçable le long d'une voie courbe fermée, les barres d'appui mobiles (10) étant disposées et leur mouvement étant choisi de telle manière que leurs extrémités avant passent à travers le train de rouleaux (14, 15) et descendent dans leur position la plus basse au-dessous du plan d'appui de ce dernier, et des prolongements (11) destinés à faire glisser de la matière en barres résiduelle (17) du train de rouleaux (14, 15) sur le poste récepteur (12) étant prévus respectivement aux extrémités avant des barres d'appui mobiles (10), caractérisé en ce que dans la région du prolongement avant (11) de chacune des barres d'appui mobiles (10) est articulée une attache transporteuse (19) dont l'autre extrémité, opposée à l'articulation (21), est guidée sur le bâti (1) du transporteur, en particulier dans la région du train de rouleaux (14, 15), de façon à pouvoir tourner et/ou coulisser longitudinalement, les attaches transporteuses (19) étant réalisées en tant qu'attaches à came, grâce à la race (22) formant came desquelles, lors du mouvement des barres d'appui mobiles (10) à partir d'une position relevée par rapport au train de rouleaux (14, 15) dans une position abaissée par rapport à celui-ci, une matière en barres résiduelles (17) à écarter du train de rouleaux (14, 15) est saisie et repoussée latéralement du train de rouleaux (14, 15).

2. Transporteur selon la revendication 1, caractérisé en ce que les prolongements (11), situés du côté du train de rouleaux (14, 15), des barres d'appui mobiles (10) présentent chacun, en formant des pièces coudées d'expulsion, un côté antérieur orienté vers l'avant, c'est-à-dire en direction du train de rouleaux (14, 15) et vers le bas, qui se termine par une face frontale avant s'étendant sensiblement perpendiculairement au plan du train de rouleaux, c'est-à-dire verticale, et en ce que la face (22) formant came de chaque attache à came (19) est réalisée de telle manière que peu avant la fin du processus d'expulsion elle soit en retrait par rapport au côté avant et à la face frontale des pièces coudées d'expulsion (11) pour faire saillie ensuite, vers la fin du processus d'expulsion, au-delà du côté avant et de la face frontale des prolongements (11), réalisés en tant que pièces coudées d'expulsion, de façon à poursuivre l'expulsion de la matiüre en barres résiduelle (17).

3. Transporteur selon la revendication 1 ou 2, caractérisé en ce que sur le côté supérieur des barres d'appui (2, 10) sont formés des prismes d'appui (5, 6) formant des cases réceptrices, le rapport des dimensions des côtés de chaque prisme d'appui (5, 6), observé à partir du train des rouleaux, étant compris entre 5:1 et 6:1.

4. Transporteur selon la revendication 3, caractérisé en ce que les faces portantes des prismes d'appui (5, 6) s'étendent chaque fois perpendiculairement l'une à l'autre.

5. Transporteur selon la revendication 3, caractérisé en ce que les surfaces portantes des prismes d'appui (5, 6) font entre elles un angle obtus, en particulier un angle d'environ 110°.

6. Transporteur selon la revendication 3, caractérisé en ce que l'angle entre les surfaces portantes de chaque prisme d'appui (5, 6) est variable.

7. Transporteur selon l'une quelsonques des revendications précédentes, caractérisé en ce qu'au train de rouleaux (14, 15) est associé un capteur par lequel la présence de matière en barres sur le train de rouleaux (14, 15) peut être détectée et l'entraînement pour les barres d'appui mobiles (10) peut être commandé en conséquence.

FIG. 1

FIG. 2

FIG. 3

EP 0 264 458 B1